# EUROPÄISCHE PATENTSCHRIFT

(11) **EP 3 719 404 B1**
(45) Veröffentlichungstag und Bekanntmachung des Hinweises auf die Patenterteilung: **08.12.2021**
(21) Anmeldenummer: 20164470.5
(22) Anmeldetag: 20.03.2020
(51) Int. Cl.: F23N 5/24, F24D 12/02, F24D 19/10, F23J 11/02

(54) **VERFAHREN ZUM BETREIBEN EINER MEHRFACH BELEGTEN HEIZUNGSANLAGE**
METHOD FOR OPERATING A HEATING SYSTEM WITH MULTIPLE COMPONENTS
PROCÉDÉ DE FONCTIONNEMENT D'UNE INSTALLATION DE CHAUFFAGE À USAGES MULTIPLES

(30) Priorität: 02.04.2019 DE 102019108517
(43) Veröffentlichungstag der Anmeldung: 07.10.2020
(73) Patentinhaber: Vaillant GmbH, 42859 Remscheid (DE)
(72) Erfinder: Wriske, Jochen, 42857 Remscheid (DE); Katterwe, Holger, 42897 Remscheid (DE); Heiler, Christian, 58456 Witten-Herbede (DE)
(74) Vertreter: Popp, Carsten

(56) Entgegenhaltungen:
- EP-A1- 3 026 342
- EP-A2- 2 735 807
- WO-A1-2009/142377
- CN-A- 106 871 447
- US-A1- 2018 112 890
- US-A1- 2018 252 418

## Beschreibung

Die Erfindung betrifft ein Verfahren zum Betreiben einer Heizungsanlage, ein Netzwerk, ein Heizgerät, ein Steuergerät sowie eine übergeordnete Verwaltungseinrichtung.

Heizungsanlagen mit mehreren Heizgeräten an einer gemeinsamen Abgasanlage werden auch als sog. Mehrfachbelegungsanlage bezeichnet. Bei einer solche Heizgeräteinstallation an einem mehrfach belegten Abgassystem sollte beachtet werden, dass sich die Druckbedingung im Abgasweg, bezogen auf ein einzelnes Heizgerät, je nach den Betriebszuständen der anderen Heizgeräte stark ändern kann, sodass die zulässigen Modulationsbereiche der Heizgeräte für den Installationsfall "Mehrfachbelegung" gegenüber dem Installationsfall "Einzelbelegung" durch den Installateur deutlich eingeschränkt werden sollten. Dies trägt dazu bei sicherzustellen, dass bei höchstem bzw. niedrigsten zu erwartendem Gegendruck das Betriebsverhalten des Gerätes stabil bleiben kann.

Die Modulationseinschränkung resultiert dabei insbesondere aus der Tatsache, dass üblicherweise in Heizgeräten die Geräteleistungsmodulation über eine Drehzahlvariation des Luft-/Abgasgebläses realisiert wird, obwohl der mit der Geräteleistung korrelierende Gas-/Luftmassenstrom stark von dem Abgasgegendruck beeinflusst wird. Ein Massenstromsensor im Luft-Abgas-System kann dazu beitragen dieses Problem zu lindern. Wegen des resultierenden erheblichen Kostennachteils solch zusätzlicher Sensorik hat sich eine entsprechende Lösung jedoch nicht signifikant im Markt durchsetzen können.

Insofern stellt die herstellerseitig parametrisierte Korrelation zwischen Soll-Geräteleistung und Gebläsedrehzahl die übliche Gerätekonfiguration dar. Die bei Mehrfachbelegung dabei üblicherweise stattfindende Einschränkung der Modulation führt zu einem erhöhten Takten der Heizgeräte in der Übergangszeit. Auf Grund der variierenden Abgasgegendrücke erfolgt weiterhin das Zünden des Heizgerätes bei variierenden Startleistungen, so dass die Zündung regelmäßig nicht bei einer zuvor herstellerseitig optimierten Startleistung erfolgen kann, was zu Fehlzündungen oder Zündungen mit erhöhten Abgasemissionen bzw. Geräuschen führen kann.

Ein Verfahren zum Betreiben einer Heizungsanlage gemäß dem Oberbegriff von Anspruch 1, eine Netzwerk gemäß dem Oberbegriff von Anspruch 9, ein Heizgerät gemäß dem Oberbegriff von Anspruch 10, ein Steuergerät gemäß dem Oberbegriff von Anspruch 11 und eine Übergeordnete Verwaltungseinrichtung gemäß dem Oberbegriff von Anspruch 12 ist aus dem Dokument EP 2 735 807 A2 bekannt. Hiervon ausgehend ist es Aufgabe der vorliegenden Erfindung, die mit Bezug auf den Stand der Technik geschilderten Probleme zumindest teilweise zu lösen. Insbesondere sollen ein Verfahren zum Betreiben einer Heizungsanlage, ein Netzwerk, ein Heizgerät, ein Steuergerät sowie eine übergeordnete Verwaltungseinrichtung angegeben werden, die jeweils zumindest dazu beitragen die Effizienz einer Mehrfachbelegungsanlage zu verbessern.

Diese Aufgaben werden gelöst durch die Merkmale der unabhängigen Patentansprüche. Weitere vorteilhafte Ausgestaltungen der hier vorgeschlagenen Lösung sind in den abhängigen Patentansprüchen angegeben. Es ist darauf hinzuweisen, dass die in den abhängigen Patentansprüchen einzeln aufgeführten Merkmale in beliebiger, technologisch sinnvoller, Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt ein Verfahren zum Betreiben einer (Mehrfachbelegungs-) Heizungsanlage mit mindestens zwei Heizgeräten bei, die an einer gemeinsamen Abgasanlage angeschlossen sind, umfassend zumindest folgende Schritte:
a) Übermitteln von Betriebszuständen von den mindestens zwei Heizgeräten an eine übergeordnete Verwaltungseinrichtung,
b) Verarbeiten der in Schritt a) übermittelten Betriebszustände durch die übergeordnete Verwaltungseinrichtung,
c) Übermitteln mindestens eines Ergebnisses aus Schritt b) an zumindest eines der mindestens zwei Heizgeräte,
d) Anpassen mindestens einer Betriebsparametervorgabe des zumindest einen der mindestens zwei Heizgeräte, wenn erkannt wurde, dass mindestens zwei der Heizgeräte gleichzeitig in einem Heizbetrieb betrieben werden.

Insbesondere dient das Verfahren zum Betreiben einer (Mehrfachbelegungs-)Heizungsanlage mit mindestens zwei hier auch vorgestellten Heizgeräten und/oder zum Betreiben eines hier auch beschriebenen Netzwerks.

In Schritt a) erfolgt ein Übermitteln von (aktuellen bzw. momentanen) Betriebszuständen von den mindestens zwei Heizgeräten an eine übergeordnete Verwaltungseinrichtung. Die Betriebszuständen können beispielsweise (ein Maß für) eine Betriebstemperatur, eine Fördereinrichtungsdrehzahl, einen Volumen- und/oder Massenstrom durch das Heizgerät und/oder eine Leistung des Heizgeräts umfassen. Alternativ oder kumulativ können die Betriebszustände auch Informationen über die Betriebsphase umfassen, in der sich das Heizgerät gerade befindet. Bevorzugt ist es, wenn die (an der Mehrfachbelegung beteiligten) Heizgeräte ihren aktuellen Betriebszustand (z. B. Aus / Startphase / aktuelle Gerätesollleistung) an die übergeordnete Verwaltungseinrichtung (z. B. eine internetbasierte Serverumgebung) übermitteln. Die Übermittlungshäufigkeit kann beispielhaft in Grenzen gewählt werden und beträgt beispielsweise 1/(10 min) [eine Übertragung pro zehn Minuten].

Die Übermittlungen können mittels einer Kommunikationseinrichtung des jeweiligen Heizgeräts durchgeführt werden. Bevorzugt ist die Kommunikationseinrichtung des Heizgeräts eine Funkeinrichtung. Die Heizgeräte können beispielsweise über ein (kabel- und/oder funkgebundenes) Internetgateway verfügen und ggf. über eine Serverarchitektur miteinander vernetzt sein, um z. B. Ferndiagnosen oder Fernbedienmöglichkeiten über Smartphones und/oder andere Internetanwendungen zu ermöglichen. Hier wird nun erstmals vorgeschlagen, die sich aus einer entsprechenden Vernetzung ergebenden Möglichkeiten in besonders vorteilhafter Weise zum Erfassen und/oder Abgleichen der Betriebszustände von Heizgeräten in eine Mehrfachbelegungsanlage zu nutzen, um etwaige Zusatzsensorik (wie z. B. den Luftmassenstromsensor) durch kalkulatorische Verfahren substituieren zu können.

Bei der übergeordneten Verwaltungseinrichtung kann es sich beispielsweise um einen (externen bzw. separaten) Server oder eine Serverarchitektur oder ein Servernetzwerk handeln. Denkbar ist auch, dass es sich bei der übergeordneten Verwaltungseinrichtung um eine sog. "Cloud" handelt. Alternativ oder kumulativ kann auch (mindestens) eines der Heizgeräte dazu eingerichtet sein (zusätzlich) als übergeordnete Verwaltungseinrichtung zu dienen. In diesem Zusammenhang kann beispielsweise eines der Heizgeräte eine sog. "Master"-Funktion übernehmen.

Bei der Heizungsanlage handelt es sich insbesondere um eine sogenannte Mehrfachbelegungsanlage. Diese zeichnet sich üblicherweise dadurch aus, dass mehrere Heizgeräte (verschiedener Wohnungen) an einer gemeinsamen Abgasanlage (eines Hauses) angeschlossen sind, die in der Regel über einen Schornstein in die Umgebung mündet.

Bei dem Heizgerät handelt es sich in der Regel um ein Gas- und/oder Ölheizgerät. Dies betrifft mit anderen Worten insbesondere ein Heizgerät, welches dazu eingerichtet ist, einen oder mehrere fossile Brennstoffe wie etwa Erdgas und/oder Erdöl, ggf. unter Zufuhr von Umgebungsluft aus einer Wohnung zu verbrennen, um Energie zur Erwärmung von beispielsweise Wasser zum Gebrauch in der Wohnung zu erzeugen. Beispielsweise kann es sich bei dem Heizgerät um ein sogenannten Gas-Brennwertgerät handeln. Das Heizgerät weist in der Regel zumindest einen Brenner und eine Fördereinrichtung auf, die ein Gemisch von Brennstoff (Gas) und Verbrennungsluft (durch einen Gemischkanal des Heizgeräts) zum Brenner fördert. Anschließend kann das durch die Verbrennung entstehende Abgas durch ein (internes) Abgasrohr des Heizgeräts zu eines Abgasanlage (eines Hauses) geführt werden. An dieser Abgasanlage sind in der Regel mehrere Heizgeräte angeschlossen.

In Schritt b) erfolgt ein Verarbeiten der in Schritt a) übermittelten Betriebszustände durch die übergeordnete Verwaltungseinrichtung. Hierzu kann die übergeordnete Verwaltungseinrichtung zumindest einen Prozessor oder einen Datenspeicher aufweisen oder auf diese zugreifen. Das Verarbeiten kann beispielsweise ein Aufbereiten von Daten und/oder ein Zusammenführen von Daten und/oder ein Vergleichen von Daten umfassen. In der Regel wird in Schritt b) ein Ergebnis der Verarbeitung, wie beispielsweise ein Berechnungs- und/oder Vergleichsergebnis bereitgestellt, das den Heizgeräten zurück übertragen werden soll.

In Schritt c) erfolgt ein Übermitteln mindestens eines Ergebnisses aus Schritt b) an zumindest eines der mindestens zwei Heizgeräte. In diesem Zusammenhang können ein oder mehrere Ergebnisse aus Schritt b) auch an die mindestens zwei Heizgeräte (bzw. an beide der Heizgeräte) übermittelt werden. Das mindestens eine Ergebnis erlaubt einem der mindestens zwei Heizgeräte vorzugsweise einen Rückschluss auf den Betriebszustand des anderen der zwei Heizgeräte.

In Schritt d) erfolgt ein Anpassen mindestens einer Betriebsparametervorgabe des zumindest einen der mindestens zwei Heizgeräte, wenn erkannt wurde, dass mindestens zwei der Heizgeräte (bzw. die mindestens zwei Heizgeräte) gleichzeitig in einem Heizbetrieb betrieben werden (sog. Mehrfachbelegung). In diesem Zusammenhang kann beispielsweise auch ein Anpassen mindestens einer Betriebsparametervorgabe der mindestens zwei Heizgeräte (bzw. beider Heizgeräte) erfolgen, wenn erkannt wurde, dass mindestens zwei der Heizgeräte gleichzeitig in einem Heizbetrieb betrieben werden.

Die Betriebsparametervorgabe beschreibt erfindungsgemäß eine Korrelation zwischen einem Betriebszustand (insbesondere einer Gerätesollleistung des Heizgeräts) und einem Betriebsparameter (insbesondere der Gebläsedrehzahl) des Heizgeräts. Bei der Betriebsparametervorgabe kann es sich zum Beispiel um ein Kennfeld oder eine Kennlinie für einen Betriebsparameter des Heizgeräts handeln. In diesem Zusammenhang kann es sich bei dem Betriebsparameter (der vorgegeben werden soll) beispielsweise um eine Drehzahl und/oder Leistung einer Fördereinrichtung des Heizgeräts handeln. Alternativ oder kumulativ kann es sich bei dem Betriebsparameter zum Beispiel um eine Betriebstemperatur des Heizgeräts und/oder um einen Fluidstrom (Volumenstrom bzw. Massenstrom) durch das Heizgerät handeln.

Die Fördereinrichtung kann beispielhaft ein Gebläse, ein Propeller, ein Verdichter oder dergleichen sein. Bevorzugt ist die Fördereinrichtung ein Gebläse. Der Fluidstrom durch das Heizgerät beschreibt mit anderen Worten einen (zumindest abschnittsweise) durch das Heizgerät, insbesondere einen Kanal des Heizgeräts hindurch strömenden Fluidstrom. Der Fluidstrom kann anhand eines Volumenstroms und/oder eines Massenstroms charakterisiert sein. Bei dem Fluid kann es sich beispielsweise um (Verbrennung-)Luft, Brennstoff (insbesondere Gas), Abgas und/oder ein Gemisch von Luft und Brennstoff handeln.

Das Anpassen gemäß Schritt d) kann beispielsweise eine Korrektur der Korrelation zwischen Betriebszustand (insbesondere der Gerätesollleistung des Heizgeräts) und dem Betriebsparameter (insbesondere der Gebläsedrehzahl) des Heizgeräts umfassen. Wenn die Betriebsparametervorgabe in der Art eines Kennfelds oder einer Kennlinie gebildet ist, kann das Anpassen gemäß Schritt d) beispielsweise durch ein Ändern (Absenken oder Erhöhen) einer Steigung des Kennfelds bzw. der Kennlinie erfolgen. Wenn die Betriebsparametervorgabe in der Art eines Sollwerts gebildet ist, kann das Anpassen gemäß Schritt d) beispielsweise durch ein Ändern (Absenken oder Erhöhen) des Sollwerts erfolgen. Wenn die Betriebsparametervorgabe in der Art eines (unteren und/oder oberen) Grenzwerts gebildet ist, kann das Anpassen gemäß Schritt d) beispielsweise durch ein Ändern (Absenken oder Erhöhen) des Grenzwerts und/oder durch ein Ändern des Abstands zwischen unterem und oberem Grenzwert erfolgen.

Nach einer vorteilhaften Ausgestaltung wird vorgeschlagen, dass in Schritt a) die mindestens zwei Heizgeräte ihre jeweilige Gerätesollleistung an die übergeordnete Verwaltungseinrichtung übermitteln. Bei der Gerätesollleistung handelt es sich insbesondere um die Leistung, die das betreffende Heizgeräte (momentan) erbringen soll. Dies erlaubt in vorteilhafter Weis, insbesondere über eine bloße Erkenntnis des Vorliegens einer momentanen Mehrfachbelegung der Abgasanlage hinausgehend, auch eine Abstimmung der (momentanen) Sollleistungen der beteiligten Heizgeräte aufeinander bzw. eine Leistungsaufteilung gemäß dem jeweiligen (momentanen) Leistungsbedarfs und der (momentanen) Belegung des Abgassystems.

Nach einer weiteren vorteilhaften Ausgestaltung wird vorgeschlagen, dass in Schritt b) die (momentanen) Gerätesollleistungen der mindestens zwei Heizgeräte zu einer (momentanen) Gesamtgeräteleistung aufsummiert werden. Dies bedeutet mit anderen Worten insbesondere, dass die übermittelten Einzel-Gerätesollleistungen (periodisch) zu einer Gesamtgeräteleistung, bezogen auf den gemeinsam genutzten Kamin bzw. die gemeinsam genutzte Abgasanlage, aufsummiert werden.

Das Aufsummieren erfolgt in der Regel auf Seiten der übergeordneten Verwaltungseinrichtung bzw. wird durch die übergeordneten Verwaltungseinrichtung durchgeführt. Alternativ oder kumulativ kann das Aufsummieren auch auf Seiten des jeweiligen Heizgeräts durchgeführt werden, das zuvor die Gerätesollleistung des jeweils anderen Heizgeräts empfangen hat.

In diesem Zusammenhang kann anschließend an Schritt b) die von der übergeordneten Verwaltungseinrichtung ermittelte Gesamtgeräteleistung an die Einzelheizgeräte zurück übermittelt werden. Alternativ oder kumulativ kann den Einzelheizgeräten auch (nur) die Gerätesollleistung des jeweils anderen Einzelheizgeräts übermittelt werden.

Nach einer weiteren vorteilhaften Ausgestaltung wird vorgeschlagen, dass in Schritt c) die Gesamtgeräteleistung an die mindestens zwei Heizgeräte übermittelt wird. In diesem Fall wurde in der Regel die Gesamtgeräteleistung zuvor von der übergeordneten Verwaltungseinrichtung ermittelt. Diese Vorgehendweise erlaubt in vorteilhafter Weise eine sehr effiziente Durchführung des Verfahrens, da die Rechenleistung für das ermitteln der Gesamtgeräteleistung auf die übergeordnete Verwaltungseinrichtung ausgelagert wird.

In diesem Zusammenhang kann beispielsweise erkannt werden, dass mindestens zwei der Heizgeräte (bzw. die mindestens zwei Heizgeräte) gleichzeitig in einem Heizbetrieb betrieben werden (sog. Mehrfachbelegung), indem (Heizgeräteseitig) geprüft wird, ob die Gesamtgeräteleistung über der Sollleistung des einzelnen Heizgerätes liegt.

Nach einer weiteren vorteilhaften Ausgestaltung wird vorgeschlagen, dass ein Maß für den thermischen Auftrieb in der Abgasanlage erfasst und an die übergeordnete Verwaltungseinrichtung übermittelt wird. Dies kann in vorteilhafter Weise zu einer Verbesserung der Anpassung in Schritt d) beitragen.

Bei dem Maß für den thermischen Auftrieb in der Abgasanlage kann es sich beispielsweise um die Abgastemperatur und/oder die Vorlauftemperatur des jeweiligen Heizgerätes handeln. In diesem Zusammenhang ist es besonders vorteilhaft, wenn bei dem Anpassen gemäß Schritt d) ein Auftriebskorrekturwert berücksichtigt wird, der in Abhängigkeit des Maßes für den thermischen Auftrieb in der Abgasanlage, beispielsweise von der übergeordneten Verwaltungseinrichtung, ermittelt wurde.

Nach einer weiteren vorteilhaften Ausgestaltung wird vorgeschlagen, dass zumindest in Schritt a) oder Schritt c) auch ein Zeitstempel mit übermittelt wird und wobei ein Kommunikationsfehler erkannt wird, wenn der Zeitstempel einen unplausiblen Wert aufweist.

In diesem Zusammenhang kann vorgesehen sein, dass das für die (zyklische) Übermittlung verwendete Protokoll zusätzlich einen Zeitstempel enthält und somit bei fehlenden Telegrammen oder solchen mit zu altem Zeitstempel das Auftreten einer Störung in der Kommunikation zwischen den angeschlossenen Heizgeräten detektiert wird. Hierdurch kann insbesondere die Modulation aller angeschlossenen Geräte für den Zeitraum der Störung auf einen zuvor festgelegten Bereich eingeschränkt werden.

Nach einem weiteren Aspekt wird auch ein Netzwerk vorgeschlagen, umfassend mindestens zwei Heizgeräte und eine übergeordnete Verwaltungseinrichtung, wobei das Netzwerk zur Durchführung eines hier beschriebenen Verfahrens eingerichtet ist.

Nach einem weiteren Aspekt wird auch ein Heizgerät für das Netzwerk vorgeschlagen, wobei das Heizgerät zumindest zur Durchführung der Schritte a) und d) eines hier beschriebenen Verfahrens eingerichtet ist. Bei dem Heizgerät handelt es sich insbesondere um ein Gasheizgerät mit einem Gasbrenner und einer Fördereinrichtung, die ein Gemisch aus Gas und Verbrennungsluft zu dem Gasbrenner fördern kann.

Nach einem weiteren Aspekt wird auch ein Steuergerät für das Heizgerät vorgeschlagen, wobei das Steuergerät zumindest zur Durchführung der Schritte a) und d) eines hier beschriebenen Verfahrens eingerichtet ist. Das Steuergerät kann hierzu beispielsweise einen Prozessor aufweisen bzw. über diesen verfügen. In diesem Zusammenhang kann der Prozessor beispielsweise das zumindest teilweise auf einem Speicher (des Steuergeräts) hinterlegte Verfahren (auf dem zumindest die Schritte a) und d) hinterlegt sind) ausführen.

Nach einem weiteren Aspekt wird auch ein übergeordnete Verwaltungseinrichtung für das Netzwerk vorgeschlagen, wobei die übergeordnete Verwaltungseinrichtung zumindest zur Durchführung der Schritte b) und c) eines hier beschriebenen Verfahrens eingerichtet ist. Die übergeordnete Verwaltungseinrichtung kann hierzu beispielsweise einen Prozessor aufweisen bzw. über diesen verfügen. In diesem Zusammenhang kann der Prozessor beispielsweise das zumindest teilweise auf einem Speicher (der übergeordnete Verwaltungseinrichtung) hinterlegte Verfahren (auf dem zumindest die Schritte b) und c) hinterlegt sind) ausführen.

Die im Zusammenhang mit dem Verfahren erörterten Details, Merkmale und vorteilhaften Ausgestaltungen können entsprechend auch bei dem hier vorgestellten Netzwerk, dem Heizgerät, dem Steuergerät und/oder der übergeordneten Verwaltungseinrichtung auftreten und umgekehrt. Insoweit wird auf die dortigen Ausführungen zur näheren Charakterisierung der Merkmale vollumfänglich Bezug genommen.

Die hier vorgestellte Lösung sowie deren technisches Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in oder in Zusammenhang mit den Figuren erläuterten Sachverhalte zu extrahieren und mit anderen Bestandteilen und/oder Erkenntnissen aus anderen Figuren und/oder der vorliegenden Beschreibung zu kombinieren. Es zeigen beispielhaft und schematisch:
- Fig. 1:: einen Ablauf eines hier vorgeschlagenen Verfahrens,
- Fig. 2:: ein Haus mit zwei hier vorgeschlagenen Heizgeräten, und
- Fig. 3:: ein hier vorgeschlagenes Netzwerk.

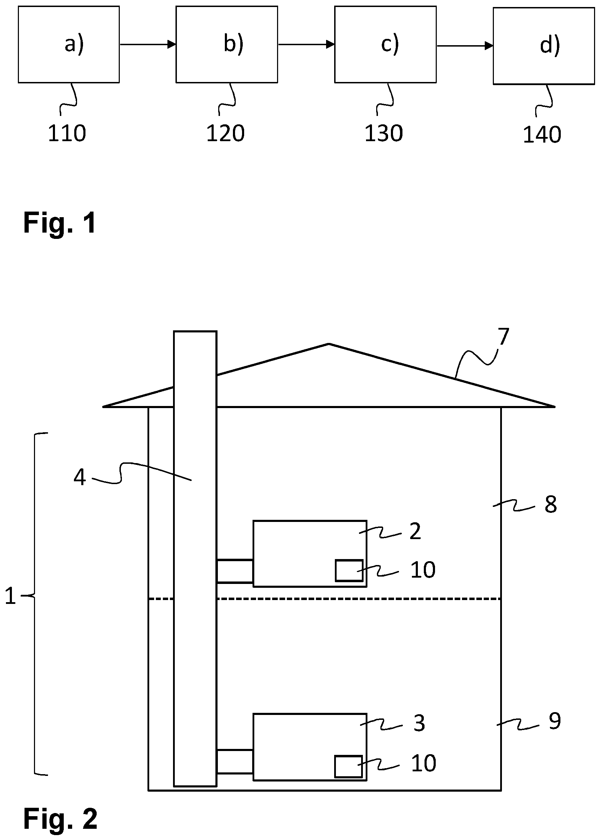

Fig. 1 zeigt beispielhaft und schematisch einen Ablauf eines hier vorgeschlagenen Verfahrens. Das Verfahren dient zum Betreiben einer Heizungsanlage 1 mit mindestens zwei Heizgeräten 2, 3, die an einer gemeinsamen Abgasanlage 4 angeschlossen sind. Die mit den Blöcken 110, 120, 130 und 140 dargestellte Reihenfolge der Schritte a), b), c) und d) kann sich bei einem regulären Betriebsablauf des Verfahrens ergeben.

In Block 110 erfolgt gemäß Schritt a) ein Übermitteln von Betriebszuständen von den mindestens zwei Heizgeräten 2, 3 an eine übergeordnete Verwaltungseinrichtung 5. In Block 120 erfolgt gemäß Schritt b) ein Verarbeiten der in Schritt a) übermittelten Betriebszustände durch die übergeordnete Verwaltungseinrichtung 5. In Block 130 erfolgt gemäß Schritt c) ein Übermitteln mindestens eines Ergebnisses aus Schritt b) an zumindest eines der mindestens zwei Heizgeräte 2, 3. In Block 140 erfolgt gemäß Schritt d) ein Anpassen mindestens einer Betriebsparametervorgabe des zumindest einen der mindestens zwei Heizgeräte 2, 3, wenn erkannt wurde, dass mindestens zwei der Heizgeräte 2, 3 gleichzeitig in einem Heizbetrieb betrieben werden.

Fig. 2 zeigt beispielhaft und schematisch ein Haus 7 mit zwei hier vorgeschlagenen Heizgeräten 2, 3. Die Heizgeräte 2, 3 befinden sich in verschiedenen Wohnungen 8, 9 des Hauses. Weiterhin sind die Heizgeräte 2, 3 an einer gemeinsamen Abgasanlage 4 des Hauses 7 angeschlossen. Somit ist hier eine Mehrfachbelegungsheizungsanlage 1 in dem Haus 7 gebildet.

Die Heizgeräte 2, 3 sind jeweils zumindest zur Durchführung der Schritte a) und d) des Verfahrens (vgl. Fig. 1) eingerichtet. Hierzu weisen diese jeweils ein Steuergerät 10 auf, welches zumindest zur Durchführung der Schritte a) und d) des Verfahrens eingerichtet ist

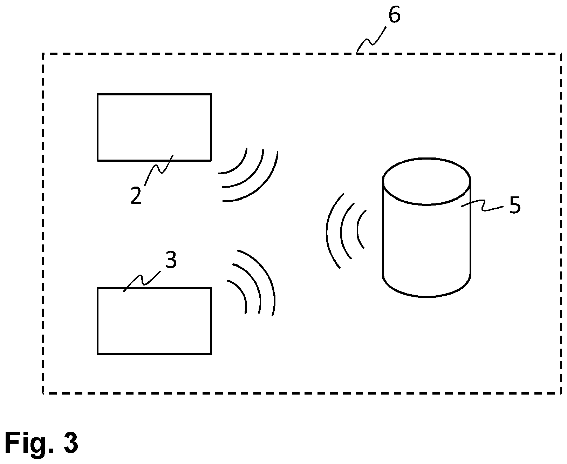

Fig. 3 zeigt beispielhaft und schematisch ein hier vorgeschlagenes Netzwerk 6. Das Netzwerk 6, umfasst beispielhaft zwei Heizgeräte 2, 3 und eine übergeordnete Verwaltungseinrichtung 5. Es können natürlich deutlich mehr Heizgeräte in dem Netzwerk vorhanden sein. Denkbar sind auch mehrere übergeordnete Verwaltungseinrichtungen in dem Netzwerk.

Das Netzwerk 6 ist zur Durchführung des Verfahrens (vgl. Fig. 1) eingerichtet. Hierzu sind die Heizgeräte 2, 3 zur Durchführung der Schritte a) und d) des Verfahrens eingerichtet. Weiterhin ist hierzu die übergeordnete Verwaltungseinrichtung 5 zur Durchführung der Schritte b) und c) des Verfahrens eingerichtet.

Nachfolgend wird mit Bezug auf die Figuren 1 bis 3 eine besonders vorteilhafte Ausgestaltung der hier beschriebenen Lösung angegeben:
Die an der Mehrfachbelegung beteiligten Heizgeräte 2, 3 übermitteln ihren aktuellen Betriebszustand (Aus/ Startphase / aktuelle Gerätesollleistung) an eine internetbasierte Serverumgebung 5. Die Übermittlungshäufigkeit kann in Grenzen gewählt werden, beträgt aber typischerweise 1/(10 min).

Die so übermittelten Einzel-Gerätesollleistungen werden periodisch zu einer Gesamtgeräteleistung, bezogen auf den gemeinsam genutzten Kamin 4, aufsummiert. Dieser Wert wird den Einzelgeräten 2, 3 zurück übermittelt.

Bei einer Gesamtgeräteleistung, die über der Sollleistung des einzelnen Heizgerätes 2, 3 liegt, wird ein Flag gesetzt, das einen zeitgleichen Betreib mehrerer Heizgeräte 2, 3 am Abgassystem 4 indiziert.

Im Falle das gesetzten Flags wird eine Korrektur der Korrelation zwischen Soll-Geräteleistung und Gebläsedrehzahl vorgenommen. Hierbei kann gemäß einem Proportionalitätsfaktor die Korrelationskennlinie umso steiler werden, je höher die aktuelle Gesamtleistung auf dem Kamin ist.

Der Proportionalitätsfaktor kann in diesem Zusammenhang beispielsweise von Durchmesser, Länge und/oder Charakteristik des verwendeten Abgassystems 4 abhängen und/oder herstellerseitig als Richtwert vorgegeben werden und/oder während der Installation mittels eines Massenstromsensors ermittelt werden.

In einer optionalen Erweiterung kann neben dem Gegendruck auch der thermische Auftrieb im Abgassystem zur Verfeinerung des Proportionalitätsfaktors herangezogen werden. In diesem Fall kann neben der Gerätesollleistung auch die aktuelle Abgastemperatur (bzw. ersatzweise die Vorlauftemperatur des Gerätes) an die Serverumgebung übermittelt und/oder mittels eines experimentell ermittelten Gewichtungsfaktors ein den Gegendruck mindernder Auftriebskorrekturwert einbezogen werden.

Hier werden somit ein Verfahren zum Betreiben einer Heizungsanlage, ein Netzwerk, ein Heizgerät, ein Steuergerät sowie eine übergeordnete Verwaltungseinrichtung angegeben, welche die mit Bezug auf den Stand der Technik geschilderten Probleme zumindest teilweise lösen. Insbesondere werden ein Verfahren zum Betreiben einer Heizungsanlage, ein Netzwerk, ein Heizgerät, ein Steuergerät sowie eine übergeordnete Verwaltungseinrichtung angegeben, die jeweils zumindest dazu beitragen die Effizienz einer Mehrfachbelegungsanlage zu verbessern.

### Bezugszeichenliste

- 1: Heizungsanlage
- 2: Heizgeräte
- 3: Heizgeräte
- 4: Abgasanlage
- 5: Verwaltungseinrichtung
- 6: Netzwerk
- 7: Haus
- 8: Wohnung
- 9: Wohnung
- 10: Steuergerät

## Patentansprüche

1. Verfahren zum Betreiben einer Heizungsanlage (1) mit mindestens zwei Heizgeräten (2, 3), die an einer gemeinsamen Abgasanlage (4) angeschlossen sind, umfassend zumindest folgende Schritte:
a) Übermitteln von Betriebszuständen von den mindestens zwei Heizgeräten (2, 3) an eine übergeordnete Verwaltungseinrichtung (5),
b) Verarbeiten der in Schritt a) übermittelten Betriebszustände durch die übergeordnete Verwaltungseinrichtung (5),
c) Übermitteln mindestens eines Ergebnisses aus Schritt b) an zumindest eines der mindestens zwei Heizgeräte (2, 3),
d) Anpassen mindestens einer Betriebsparametervorgabe des zumindest einen der mindestens zwei Heizgeräte (2, 3), wenn erkannt wurde, dass mindestens zwei der Heizgeräte (2, 3) gleichzeitig in einem Heizbetrieb betrieben werden,
**dadurch gekennzeichnet, dass** die Betriebsparametervorgabe eine Korrelation zwischen einem Betriebszustand und einem Betriebsparameter des Heizgeräts (2, 3) beschreibt.

2. Verfahren nach Anspruch 1, wobei in Schritt a) die mindestens zwei Heizgeräte (2, 3) ihre jeweilige Gerätesollleistung an die übergeordnete Verwaltungseinrichtung (5) übermitteln.

3. Verfahren nach Anspruch 2, wobei in Schritt b) die Gerätesolleistungen der mindestens zwei Heizgeräte (2, 3) zu einer Gesamtgeräteleistung aufsummiert werden.

4. Verfahren nach Anspruch 3, wobei in Schritt c) die Gesamtgeräteleistung an die mindestens zwei Heizgeräte (2, 3) übermittelt wird.

5. Verfahren nach einem der vorhergehenden Ansprüche, wobei ein Maß für den thermischen Auftrieb in der Abgasanlage (4) erfasst und an die übergeordnete Verwaltungseinrichtung (5) übermittelt wird.

6. Verfahren nach einem der vorhergehenden Ansprüche, wobei die Betriebsparametervorgabe eine Korrelation zwischen einer Gerätesollleistung des Heizgeräts (2, 3) und einer Gebläsedrehzahl des Heizgeräts (2, 3) beschreibt.

7. Verfahren nach einem der vorhergehenden Ansprüche, wobei die Betriebsparametervorgabe in der Art eines Kennfelds oder einer Kennlinie gebildet ist und das Anpassen gemäß Schritt d) durch ein Ändern einer Steigung des Kennfelds bzw. der Kennlinie erfolgt.

8. Verfahren nach einem der vorhergehenden Ansprüche, wobei zumindest in Schritt a) oder Schritt c) auch ein Zeitstempel mit übermittelt wird und wobei ein Kommunikationsfehler erkannt wird, wenn der Zeitstempel einen unplausiblen Wert aufweist.

9. Netzwerk (6), umfassend mindestens zwei Heizgeräte (2, 3) und eine übergeordnete Verwaltungseinrichtung (5), **dadurch gekennzeichnet, dass** das Netzwerk (6) zur Durchführung eines Verfahrens nach einem der vorhergehenden Ansprüche eingerichtet ist.

10. Heizgerät (2, 3) für ein Netzwerk (6) nach Anspruch 9, **dadurch gekennzeichnet, dass** das Heizgerät (2, 3) ein Steuergerät (10) enthält welches zumindest zur Durchführung der Schritte a) und d) eines Verfahrens nach einem der Ansprüche 1 bis 8 eingerichtet ist.

11. Steuergerät (10) für ein Heizgerät (2, 3) nach Anspruch 10, **dadurch gekennzeichnet, dass** das Steuergerät zumindest zur Durchführung der Schritte a) und d) eines Verfahrens nach einem der Ansprüche 1 bis 8 eingerichtet ist.

12. Übergeordnete Verwaltungseinrichtung (5) für ein Netzwerk (6) nach Anspruch 9, **dadurch gekennzeichnet, dass** die übergeordnete Verwaltungseinrichtung (5) zumindest zur Durchführung der Schritte b) und c) eines Verfahrens nach einem der Ansprüche 1 bis 8 eingerichtet ist.

## Claims

1. Method for operating a heating system (1) having at least two heaters (2, 3) which are connected to a common exhaust system (4), comprising at least the following steps:
a) transmission of operating states from the at least two heaters (2, 3) to a higher-level management apparatus (5),
b) processing of the operating states transmitted in step a) by the higher-level management apparatus (5),
c) transmitting at least one result from step b) to at least one of the at least two heaters (2, 3),
d) adapting at least one operating parameter specification of the at least one of the at least two heaters (2, 3) if it has been detected that at least two of the heaters (2, 3) are being operated simultaneously in a heating mode,
**characterised in that** the operating parameter specification describes a correlation between an operating state and an operating parameter of the heater (2, 3).

2. Method according to claim 1, wherein in step a) the at least two heaters (2, 3) transmit their respective device setpoint power to the higher-level management device (5).

3. Method according to claim 2, wherein in step b) the device setpoint powers of the at least two heaters (2, 3) are added up to give a total device power.

4. Method according to claim 3, wherein in step c) the total device power is transmitted to the at least two heaters (2, 3).

5. Method according to any of the preceding claims, wherein a measure of the thermal lift in the exhaust system (4) is recorded and transmitted to the higher-level management apparatus (5).

6. Method according to any of the preceding claims, wherein the operating parameter specification describes a correlation between a device setpoint power of the heater (2, 3) and a fan speed of the heater (2, 3).

7. Method according to any of the preceding claims, wherein the operating parameter specification is formed in the manner of a characteristic diagram or a characteristic curve and the adapting according to step d) is carried out by changing a gradient of the characteristic diagram or the characteristic curve.

8. Method according to any of the preceding claims, wherein at least in step a) or step c) a time stamp is also transmitted and wherein a communication error is detected if the time stamp has an implausible value.

9. Network (6) comprising at least two heaters (2, 3) and a higher-level management apparatus (5), **characterised in that** the network (6) is configured to perform a method according to any of the preceding claims.

10. Heater (2, 3) for a network (6) according to claim 9, **characterised in that** the heater (2, 3) contains a control device (10) which is configured to perform at least steps a) and d) of a method according to any of claims 1 to 8.

11. Control device (10) for a heater (2, 3) according to claim 10, **characterised in that** the control device is configured to perform at least steps a) and d) of a method according to any of claims 1 to 8.

12. Higher-level management apparatus (5) for a network (6) according to claim 9, **characterised in that** the higher-level management apparatus (5) is configured to perform at least steps b) and c) of a method according to any of claims 1 to 8.

## Revendications

1. Procédé pour faire fonctionner une installation de chauffage (1) avec au moins deux appareils de chauffage (2, 3) qui sont reliés à une installation d'échappement commune (4), comprenant au moins les étapes suivantes consistant à :
a) transmettre des états de fonctionnement des au moins deux appareils de chauffage (2, 3) à un dispositif de gestion de niveau supérieur (5),
(b) traiter les états de fonctionnement transmis à l'étape (a) par l'intermédiaire du dispositif de gestion de niveau supérieur (5),
c) transmettre au moins un résultat de l'étape b) à au moins l'un des au moins deux appareils de chauffage (2, 3),
d) adapter au moins une spécification de paramètre de fonctionnement du au moins un des au moins deux appareils de chauffage (2, 3) lorsqu'il a été détecté qu'au moins deux des appareils de chauffage (2, 3) fonctionnent simultanément dans un mode de chauffage,
**caractérisé en ce que** la spécification de paramètre de fonctionnement décrit une corrélation entre un état de fonctionnement et un paramètre de fonctionnement de l'appareil de chauffage (2, 3).

2. Procédé selon la revendication 1, dans lequel à l'étape a), les au moins deux appareils de chauffage (2, 3) transmettent leur capacité nominale d'appareil respective au dispositif de gestion de niveau supérieur (5).

3. Procédé selon la revendication 2, dans lequel à l'étape b), les capacités nominales d'appareil des au moins deux appareils de chauffage (2, 3) sont additionnées pour former une capacité d'appareil totale.

4. Procédé selon la revendication 3, dans lequel à l'étape c), la capacité d'appareil totale est transmise aux au moins deux appareils de chauffage (2, 3).

5. Procédé selon l'une quelconque des revendications précédentes, dans lequel une mesure de la poussée thermique dans l'installation d'échappement (4) est détectée et transmise au dispositif de gestion de niveau supérieur (5).

6. Procédé selon l'une quelconque des revendications précédentes, dans lequel la spécification de paramètre de fonctionnement décrit une corrélation entre une capacité nominale d'appareil de l'appareil de chauffage (2, 3) et une vitesse de soufflage de l'appareil de chauffage (2, 3).

7. Procédé selon l'une quelconque des revendications précédentes, dans lequel la spécification de paramètre de fonctionnement est formée à la manière d'un diagramme caractéristique ou d'une courbe caractéristique, et l'adaptation selon l'étape d) est effectuée par modification d'une pente du diagramme caractéristique ou de la courbe caractéristique.

8. Procédé selon l'une quelconque des revendications précédentes, dans lequel un horodatage est également transmis au moins à l'étape a) ou à l'étape c), et dans lequel une erreur de communication est détectée lorsque l'horodatage présente une valeur non plausible.

9. Réseau (6) comprenant au moins deux appareils de chauffage (2, 3) et un dispositif de gestion de niveau supérieur (5), **caractérisé en ce que** le réseau (6) est agencé pour mettre en œuvre un procédé selon l'une quelconque des revendications précédentes.

10. Appareil de chauffage (2, 3) pour un réseau (6) selon la revendication 9, **caractérisé en ce que** l'appareil de chauffage (2, 3) contient un appareil de commande (10) qui est agencé au moins pour exécuter les étapes a) et d) d'un procédé selon l'une quelconque des revendications 1 à 8.

11. Appareil de commande (10) pour un appareil de chauffage (2, 3) selon la revendication 1, **caractérisé en ce que** l'appareil de commande (10) est conçu au moins pour une mise en œuvre des étapes (a) et (d) d'un procédé selon l'une quelconque des revendications 1 à 8.

12. Dispositif de gestion de niveau supérieur (5) pour un réseau (6) selon la revendication 9, **caractérisé en ce que** le dispositif de gestion de niveau supérieur (5) est agencé au moins pour une mise en œuvre des étapes b) et c) d'un procédé selon l'une quelconque des revendications 1 à 8.
